# EUROPÄISCHE PATENTSCHRIFT

(11) **EP 1 986 837 B1**
(45) Veröffentlichungstag und Bekanntmachung des Hinweises auf die Patenterteilung: **12.12.2012**
(21) Anmeldenummer: 07702802.5
(22) Anmeldetag: 17.01.2007
(51) Int. Cl.: B29C 45/18

(54) **SPRITZGIESSVERFAHREN ZUM BEIMISCHEN EINES VERNETZENDEN INITIATORS**
INJECTION-MOULDING PROCESS FOR ADMIXTURE OF A CROSSLINKING INITIATOR
PROCEDE DE MOULAGE PAR INJECTION PERMETTANT LE MELANGE D'UN INITIATEUR DE RETICULATION

(30) Priorität: 22.02.2006 DE 102006008223
(43) Veröffentlichungstag der Anmeldung: 05.11.2008
(73) Patentinhaber: Bayerische Motoren Werke Aktiengesellschaft, 80809 München (DE)
(72) Erfinder: WOLFF, Thomas, 84028 Landshut (DE); NOLEWAJKA, Marek, 84034 Landshut (DE)
(86) Internationale Anmeldenummer: PCT/EP2007/000345
(87) Internationale Veröffentlichungsnummer: WO 2007/096029

(56) Entgegenhaltungen:
- DE-A1- 2 063 756
- DE-A1- 2 144 069
- DE-A1- 2 609 854
- DE-A1- 19 521 450
- US-A- 4 790 992

## Beschreibung

Die Erfindung bezieht sich auf ein Spritzgießverfahren zum Herstellen eines Spritzgussteils, bei dem eine thermoplastische Spritzgießmasse in einem Einspritzzylinder plastifiziert und mittels eines in diesem hubbeweglich angeordneten Einspritzelements über einen Angusskanal in die Formkavität eines Formwerkzeugs eingespritzt wird, wobei der Spritzgießmasse während des Einspritzvorgangs jeweils ein die Spritzgießmasse vernetzender Initiator im Bereich der Einspritzstrecke zwischen Einspritzelement und Formkavität zugemischt wird, nach dem Oberbegriff des Patentanspruchs 1.

Nach den aus der DE 26 09 854 A1 und der DE 21 44 069 A1 bekannten Verfahren dieser Art werden die Materialeigenschaften des thermoplastischen Werkstoffs hinsichtlich Festigkeit, Steifigkeit und Warmformbeständigkeit dadurch verbessert, dass zu der schmelzflüssig erwärmten, thermoplastischen Formmasse ein die Molekülketten vernetzender Initiator im Angusskanal des Formwerkzeugs zugegeben und mit der Formmasse durch einen rotierenden Kegelkörper durchmischt wird, welcher aus der Trennebene des Formwerkzeugs herausragt, um eine gute Entformbarkeit der Mischkammer, die allmählich durch die aushärtende Formmasse verstopft wird, zu erreichen.

Demgegenüber ist es Aufgabe der Erfindung, ein Verfahren der eingangs genannten Art so auszubilden, dass Störungen des Spritzgießprozesses, verursacht durch eine initiatordurchmischte und sich beim Verweilen zwischen Einspritzdüse und Formkavität verfestigende Spritzgießmasse, wirksam unterbunden werden. Diese Aufgabe wird erfindungsgemäß durch das im Patentanspruch 1 gekennzeichnete Spritzgießverfahren gelöst.

Erfindungsgemäß wird der Spritzgießprozess dadurch gegen ein Blockieren durch eine initiatorvernetzte Spritzgießmasse geschützt, dass in der Endphase des Einspritzvorgangs die Initiatorzugabe beendet und die Einspritzstrecke zwischen der Initiator-Zugabestelle und der Formkavität des Formwerkzeugs zumindest teilweise, nämlich gemäß Anspruch 2 vorzugsweise im Bereich des Heißkanals, mit einer initiatorfreien Spritzgießmasse freigespritzt wird.

In vorteilhafter Ausgestaltung der Erfindung wird gemäß Anspruch 3 aus Gründen einer sicheren und exakten Dosierung zweckmäßigerweise eine druckpumpengeförderte und ventilgesteuerte Initiatoreinspeisung gewählt, und ebenfalls aus Sicherheitsgründen empfiehlt es sich, die Initiatorzuführung gemäß Anspruch 4 im Mündungsbereich thermisch von der Einspritzstrecke zu isolieren, um einen unzulässig hohen Wärmezustrom zu dem in der Zufuhrleitung anstehenden Initiator von Seiten der heißen Einspritzstrecke zu verhindern.

Gemäß Anspruch 5 schließlich wird die Verweilzeit zwischen Mischzone und Formkavität dadurch möglichst kurz gehalten, dass der Initiator vorzugsweise erst im Angusskanal mit der Spritzgießmasse durchmischt wird, und ferner wird der Angusskanal gemäß Anspruch 6 zweckmäßigerweise in die Trennebene des Formwerkzeugs verlegt, damit sich ein in diesem verbliebener und bei einer Unterbrechung des Spritzgießprozesses möglicherweise verfestigter Materialstrang problemlos und ungehindert entformen lässt.

Weitere vorteilhafte Ausgestaltungen der Erfindung beziehen sich auf die Sicherheit der Initiatoreinspeisung. So wird aus Gründen einer sicheren und exakten Dosierung zweckmäßigerweise eine druckpumpengeförderte und ventilgesteuerte Initiatorzugabe gewählt, und die Ventilanordnung in der Initiatorzufuhrleitung, einschließlich eines sich zur Einspritzstrecke öffnenden Einwegeventils, liegt vorzugsweise im Bereich der Initiator-Zugabestelle der Einspritzstrecke. Hierdurch wird ein Rückfluss der Spritzgießmasse in die Initiatorzufuhrleitung unterbunden und sichergestellt, dass eine Selbstreaktion des Initiators, die durch eine fehlerhafte Temperatursteuerung an der Zugabestelle der Einspritzstrecke ausgelöst werden könnte, nicht zurückschlägt, sondern auf den Zugabebereich des Initiators beschränkt bleibt. Ebenfails aus Sicherheitsgründen empfiehlt es sich, die Initiatorzufuhrleitung im Mündungsbereich thermisch isoliert an die Einspritzstrecke anzuschließen, um einen unzulässig hohen Wärmezustrom zu dem in der Zufuhrleitung anstehenden Initiator von Seiten der heißen Einspritzstrecke zu verhindern.

Die Erfindung wird nunmehr anhand eines Ausführungsbeispiels in Verbindung mit den Zeichnungen näher erläutert. Es zeigen in stark schematisierter Darstellung:
- **Fig. 1**: eine Spritzgießmaschine nach der Erfindung im Schnitt;
- **Fig. 2**: eine ausschnittweise, vergrößerte Darstellung des Angusskanals der Spritzgießmaschine nach Fig. 1; und
- **Fig. 3**: eine ausschnittweise, vergrößerte Darstellung der Initiatorzufuhrleitung im Bereich der thermisch entkoppelten Zugabestelle.

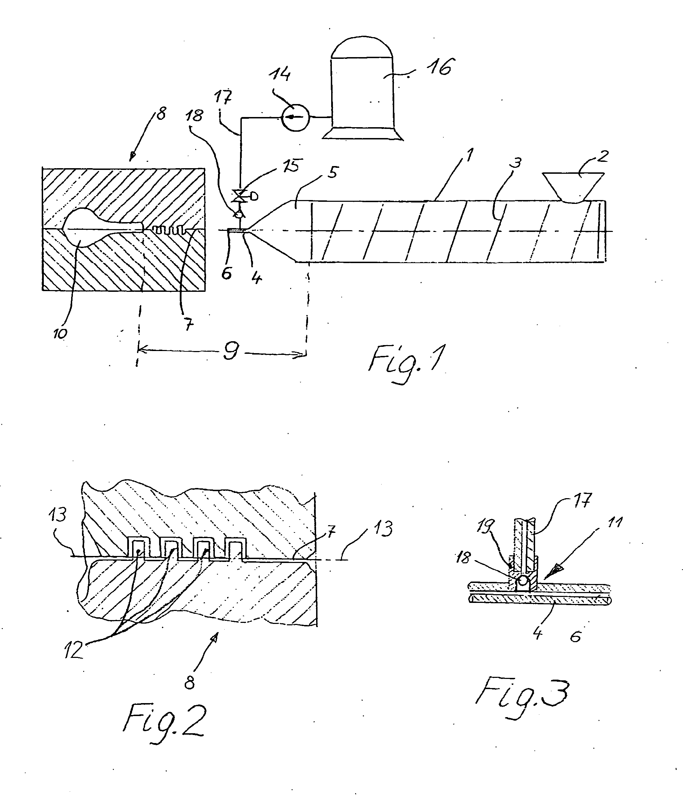

Die in Fig. 1 gezeigte Spritzgießmaschine enthält einen Einspritzzylinder 1 einschließlich eines Einfülltrichters 2 für ein thermoplastisches Kunststoffgranulat, eines Einspritzelements in Form einer drehbar und axial hubbeweglich angetriebenen Plastifizierschnecke 3 und einer Einspritzdüse 4. Der Schneckenvorraum 5 bildet zusammen mit dem Düsenkanal 6 und dem in der Einspritzphase angedockten Angusskanal 7 des Formwerkzeugs 8 eine insgesamt mit 9 bezeichnete Einspritzstrecke, über die die fließfähig erwärmte Kunststoffmasse beim Vorwärtshub der Plastfizierschnecke 3 in die Formkavität 10 des Formwerkzeugs 8 eingespritzt wird. Insoweit ist die Spritzgießmaschine von herkömmlicher Bau- und Funktionsweise.

Erfindungsgemäß werden die Materialeigenschaften der aus der thermoplastischen Kunststoffmasse hergestellten Spritzgussteile hinsichtlich Steifigkeit, Festigkeit und Warmformbeständigkeit dadurch erheblich verbessert, dass der Kunststoffmasse ein die Molelülketten vernetzender Initiator, etwa in Form eines flüssigen Peroxids, zugemischt wird. Die Initiator-Zugabestelle 11 (Fig. 3) liegt im Bereich eines relativ geringen Durchflussquerschnitts der Einspritzstrecke 9, also etwa im Einlassbereich des Angusskanals 7 oder, wie bei dem gezeigten Ausführungsbeispiel, im Düsenkanal 6 der Einspritzdüse 4. Durch eine solche Einspeisung in einen geringen Kanalquerschnitt wird eine Vorvermischung des Initiators mit der vorbeifließenden Kunststoffschmelze erreicht, wodurch lokale Initiatoranreicherungen und die daraus resultierende Gefahr einer Selbstreaktion des Initiators unterbunden werden. Durch die Initiatorzugabe nimmt die Viskosität der Kunststoffschmelze innerhalb kurzer Zeit stark zu. Die Länge der Einspritzstrecke 9 zwischen der Zugabestelle 11 und der Formkavität 10 und dementsprechend die Verweilzeit der mit Initiator versetzten Schmelze werden jedoch so kurz gewählt, dass der Einspritzvorgang nicht durch einen die Einspritzstrecke 9 blockierenden Kunststoffstopfen zum Erliegen kommt. Ferner wird die Initiatorzugabe im letzten Teil des Einspritzvorgangs beendet und eine initiatorfreie Kunststoffschmelze mit einem dem Volumen der Einspritzstrecke 9 zumindest teilweise entsprechenden und wenigstens gleich großen Restvolumen wie das Düsenkanalvolumen zwischen Zugabestelle 11 und Düsenausgang nachgespritzt, so dass der gesamte Einspritzzylinder 1 im Anschluss an das Schussende mit einer ausschließlich initiatorfreien, im Bereich der aus Schneckenvorraum 5 und Düsenkanal 6 bestehenden Heißkanalstrecke schmelzflüssigen Kunststoffmasse belegt ist.

Im Hinblick auf eine hohe Bauteliqualität wird zusätzlich zu der Vorvermischung an der Zugabestelle 11 ein inniger Durchmischungseffekt der Initiator/Kunststoffschmelze im Angusskanal 7 durch in diesem mäanderförmig angeordnete Durchmischungselemente 12 erzielt (Fig. 2). Nach dem Schussende verfestigt sich die im Angusskanal 7 verbliebene Spritzgießmasse und muss dem Formwerkzeug 8 gemeinsam mit dem Spritzgussteil entnommen werden. Dies ist trotz der Anordnung der Durchmischungselemente 12 im Angusskanal 7 dadurch problemlos möglich, dass der Angusskanal 7 in der Trennebene 13 (Fig. 2) des Formwerkzeugs 8 verläuft und daher in der Öffnungslage des Formwerkzeugs 8 zum Entformen des Angussstrangs frei zugänglich ist.

Aus Gründen einer sicheren und mengenmäßig exakten Zumischung des Initiators wird dieser mittels einer Dosierpumpe 14 und eines nachgeschalteten, elektrisch betätigten Steuerventils 15 aus einem Vorratstank 16 in den Düsenkanal 6 eingespeist. Um einen Rückfluss der Kunststoffschmelze aus dem Düsenkanal 6 in die Initiatorzufuhrleitung 17 zu verhindern, ist in dieser in unmittelbarer Nähe der Zugabestelle 11 ein sich zum Düsenkanal 6 hin öffnendes Rückschlagventil 18 angeordnet.

Gemäß Fig. 3 schließlich ist die Zufuhrleitung 17 im Bereich der Zugabestelle 11 unter Zwischenlage eines Anschlusselements 19 geringer Wärmeleitfähigkeit thermisch von der Einspritzdüse 4 entkoppelt, wodurch verhindert wird, dass der in der Leitung 17 anstehende Initiator infolge eines Wärmezustroms von Seiten der Einspritzdüse 4 ein bezüglich einer Selbstreaktion kritisches Temperaturniveau erreicht.

## Patentansprüche

1. Verfahren zum Herstellen eines Spritzgussteils, bei dem eine thermoplastische Spritzgießmasse in einem Einspritzzylinder (1) plastifiziert und mittels eines in diesem hubbeweglich angeordneten Einspritzelements (3) über einen Angusskanal (7) in die Formkavität (10) eines Formwerkzeugs (8) eingespritzt und anschließend entformt wird, wobei der Spritzgießmasse während des Einspritzvorgangs jeweils ein die Spritzgießmasse vernetzender Initiator im Bereich der Einspritzstrecke (9) zwischen Einspritzelement (3) und Formkavität (10) zugemischt wird, **dadurch gekennzeichnet, dass** in der Endphase des Einspritzvorgangs die Initiatorzumischung beendet und die initiatorfreie Spritzgießmasse mit einem dem Volumen der Einspritzstrecke (9) zwischen der Zugabestelle (11) des Initiators und der Formkavität (10) des Formwerkzeugs (8) zumindest teilweise entsprechenden Restvolumen nachgespritzt wird.

2. Verfahren nach Anspruch 1, **dadurch gekennzeichnet, dass** das initiatorfrei nachgespritzte Restvolumen mindestens gleich groß wie das Heißkanalvolumen zwischen der Initiatorzugabestelle (11) und dem Heißkanalende bemessen wird.

3. Verfahren nach Anspruch 1 oder 2, **dadurch gekennzeichnet, dass** die Initiatorzugabe druckpumpengefördert und ventilgesteuert wird.

4. Verfahren nach einem der vorhergehenden Ansprüche, **dadurch gekennzeichnet, dass**
die Initiatorzuführung thermisch von der Einspritzstrecke (4, 5, 6, 7) entkoppelt wird.

5. Verfahren nach einem der vorhergehenden Ansprüche, **dadurch gekennzeichnet, dass**
der Initiator im Angusskanal (7) des Formwerkzeugs (8) mit der Spritzgießmasse durchmischt wird.

6. Verfahren nach Anspruch 5, **dadurch gekennzeichnet, dass** der Initiator in einer in der Trennebene (13) des Formwerkzeugs (8) angeordneten Mischzone (Durchmischungselemente 12) mit der Spritzgießmasse durchmischt wird.

## Claims

1. A method of producing an injection-moulded part wherein a thermoplastic injection moulding compound is plasticised in an injection cylinder (1) and, by means of an injection element (3) disposed so as to reciprocate in the cylinder (1), is injected through a distribution channel (7) into the mould cavity (10) of a die (8) and subsequently removed from the mould, wherein during the injection process, an initiator for cross-linking the injection moulding compound is mixed therewith in the passage (9) between the injection element (3) and the mould cavity (10), **characterised in that**
in the end phase of the injection process the initiator-mixing operation is stopped and the initiator-free injection moulding compound is additionally injected in a residual volume at least partly corresponding to the
volume of the passage (9) between the place (11) where the initiator is added and the cavity (10) of the die (8).

2. A method according to claim 1, **characterised in that** the initiator-free subsequently-injected residual volume is at least as great as the volume of the hot channel between the place (11) where the initiator is added and the end of the hot channel.

3. A method according to claim 1 or claim 2, **characterised in that**
the initiator is added via a pressure pump and controlled by a valve.

4. A method according to any of the preceding claims, **characterised in that**
the initiator supply is thermally uncoupled from the passage (4, 5, 6, 7).

5. A method according to any of the preceding claims, **characterised in that**
the initiator is thoroughly mixed with the injection moulding compound in the distribution channel (7) of the die (8).

6. A method according to claim 5, **characterised in that** the initiator is thoroughly mixed with the injection compound in a mixing area (mixing elements 12) disposed in the parting plane (13) of the die (8).

## Revendications

1. Procédé d'obtention d'une pièce moulée par injection selon lequel on plastifie une masse de moulage par injection thermoplastique dans un cylindre d'injection (1), on l'injecte par un canal d'injection (7), dans la cavité de moulage (10) d'un outil de moulage (8) au moyen d'un élément d'injection (3) monté mobile dans ce cylindre, puis on démoule la pièce moulée, un initiateur de réticulation de la masse de moulage par injection étant mélangé à cette masse pendant le processus d'injection, dans la zone du segment d'injection (9) situé entre l'élément d'injection (3) et la cavité de moulage (10),
**caractérisé en ce que**
dans la phase finale du processus d'injection, on arrête le mélange de l'initiateur et l'on effectue une post injection de la masse de moulage par injection exempte d'initiateur avec un volume résiduel correspondant au moins partiellement au volume du segment d'injection (9) situé entre le point d'addition (11) de l'initiateur et la cavité de moulage (10) de l'outil de moulage (8).

2. Procédé conforme à la revendication 1,
**caractérisé en ce que**
le volume résiduel exempt d'initiateur post injecté est fixé au moins à la même dimension que le volume du canal chauffant situé entre le point d'addition de l'initiateur (11) et l'extrémité de ce canal.

3. Procédé conforme à la revendication 1 ou 2,
**caractérisé en ce que**
l'addition d'initiateur est assurée par une pompe de refoulement et commandée par une soupape.

4. Procédé conforme à l'une des revendications précédentes, **caractérisé en ce que**
l'addition d'initiateur est découplée thermiquement du segment d'injection (4, 5, 6, 7).

5. Procédé conforme à l'une des revendications précédentes, **caractérisé en ce que**
l'initiateur est mélangé à la masse de moulage par injection dans le canal d'injection (7) de l'outil de moulage (8).

6. Procédé conforme à la revendication 5,
**caractérisé en ce que**
l'initiateur est mélangé à la masse de moulage par injection dans une zone de mélange située dans le plan de joint (13) de l'outil de moulage (8) (éléments de mélange 12).
